# EUROPEAN PATENT APPLICATION

(11) **EP 2 599 965 A2**
(43) Date of publication of application: **05.06.2013**
(21) Application number: 12193861.7
(22) Date of filing: 22.11.2012
(51) Int. Cl.: F01D 11/00

(54) **Shim seal assembly and assembly methods for stationary components of rotary machines**

(30) Priority: 29.11.2011 US 201113306090
(71) Applicant: General Electric Company, Schenectady, New York 12345 (US)
(72) Inventor: Sarawate, Neelesh Nandkumar, Niskayuna, NY New York 12309 (US); Morgan, Victor John, Niskayuna, NY New York 12309 (US); Weber, David Wayne, Niskayuna, NY New York 12309 (US)
(74) Representative: Cleary, Fidelma

(57) **Abstract**

A seal assembly for a rotary machine is provided. The seal assembly includes a shim seal (14) including multiple seal plates forming a C-shaped shim seal (14) or a box shaped shim seal. The C-shaped shim seal (18) includes a first side portion (34) having a smaller width than that of an opposing second side portion (36), and the second side portion of the C-shaped shim seal (14) includes a gap between at least two straight faces with an inward angle for allowing positioning within the slot (18) between stator components (12, 13). The box shaped seal includes a plurality of cuts at two opposing sides or corners for allowing high pressure fluid to occupy the cavity of the box-shaped shim seal. The seal (18) may be inserted within one or more slots (18) between adjacent stator components (12, 13) of the rotary machine.

## Description

### BACKGROUND

The invention relates generally to seals for reducing leakage and more particularly to shim seals for reducing leakages through gaps between stationary components of rotary machines.

Generally a variety of seals are used in industrial rotary machines such as gas turbines to control leakages within adjacent static components of a stator such as shrouds, nozzles, and diaphragms. Gas leakage, either out of a gas path or into the gas path, from an area of high pressure to an area of low pressure is generally undesirable. For example, gas-path leakage in a turbine area of a gas turbine will lower the efficiency of the gas turbine leading to increased fuel cost. Therefore, seals are provided to control the leakage of extracted air that is provided around or surrounding the turbine from the compressor. Also, gas-path leakage in a combustor area of a gas turbine will require an increase in bum temperature to maintain a desired power level. Increased burn temperatures lead to increased NOₓ and CO production. Stationary components often have surfaces of different shapes and may expand differently under high temperature conditions causing misalignment.

Cloth seals have been used in gas-path leakage gaps in stator regions of gas turbines. Generally, a cloth seal comprises a central shim with cloth layers on each side. The cloth seals provide wear resistance without adding significant stiffness to the seal. However, cloth seals may allow undesirable leakage through the two side faces. The cloth seal may also become crimped or nonelastically bent within the gap between two stationary components and thus may seal the gap less effectively than desired.

Accordingly, it would be desirable to reduce leakages between gaps of stationary components in the rotary machine.

### BRIEF DESCRIPTION

In accordance with one aspect of the invention, a seal assembly for a rotary machine is provided. The seal assembly includes a shim seal sized for positioning in a slot between stator components of the rotary machine and includes multiple seal plates forming a C-shaped shim seal. The shim seal comprises two straight faces coupled by first and second side portions. The first side portion has a smaller width than the second side portion, and the second side portion comprises a gap and an inward angle for allowing for insertion of the shim seal within the slot between the stator.

In accordance with another aspect of the invention, a shim seal for turbine components is provided. The shim seal includes one or more seal plates forming a box-shaped shim seal sized for positioning in a slot between turbine components. The box-shaped shim seal comprises a rectangular cross-sectional shape with corners having curvatures.

In accordance with yet another aspect of the invention, a method of reducing leakage in a rotary machine is provided. The method includes inserting a first side portion of a shim seal within a first slot of a first stator component of the rotary machine. The method also includes inserting a second side portion of the shim seal within a second slot of a second stator component of the rotary machine, wherein the shim seal comprises one or more seal plates joined to form a box-shaped shim seal or a C-shaped shim seal.

### DRAWINGS

Embodiments of the present invention will now be described, by way of example only, with reference to the accompanying drawings in which:
FIG. 1 is cross-section view of a portion of stationary component of a rotary machine with a seal assembly for reducing leakage in accordance with an embodiment of the present invention.
FIG. 2 is a cross-sectional view of a shim seal of a rotary machine in accordance with another embodiment of the present invention.
FIG. 3 is a perspective view of a shim seal of a rotary machine in accordance with an embodiment of the present invention.
FIG. 4 is a perspective view of a shim seal of a rotary machine in accordance with another embodiment of the present invention.
FIG. 5 is a flow chart for a method of reducing leakage in a rotary machine in accordance with an embodiment of the present invention.

### DETAILED DESCRIPTION

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Any examples of operating parameters are not exclusive of other parameters of the disclosed embodiments.

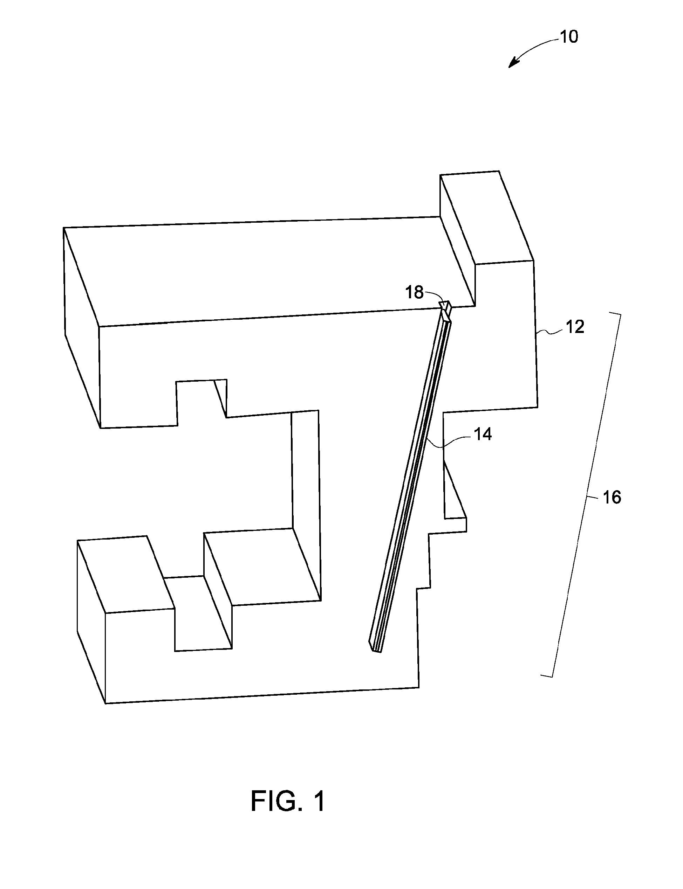

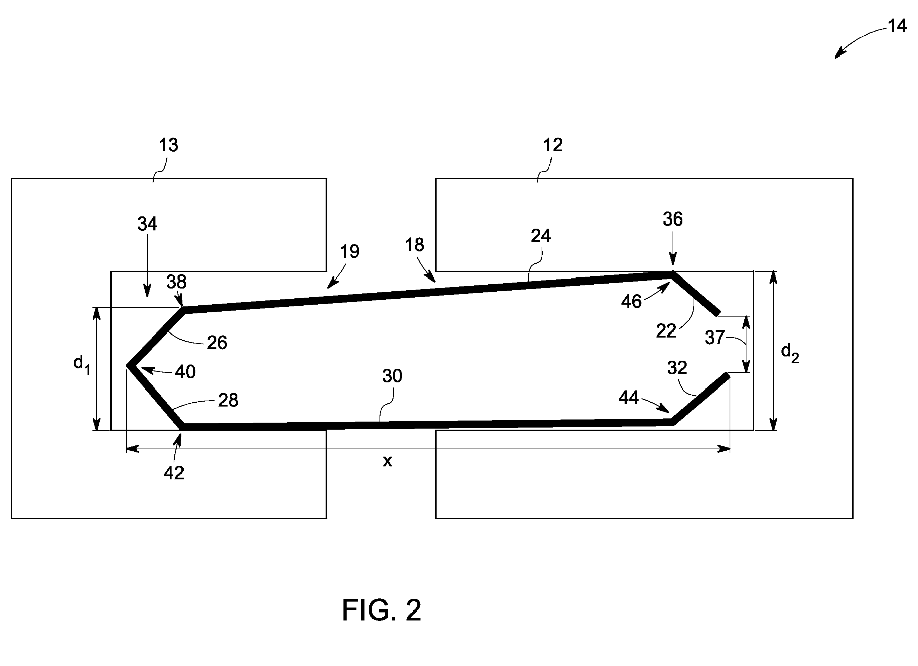

FIG. 1 illustrates a representative example of a stator portion of a rotary machine, designated generally as reference numeral 10 having a stationary component 12 along with a shim seal 14 forming a seal assembly 16 in accordance with an embodiment of the present invention. It is to be noted that the rotary machine may include multiple shim seals 14 located in respective slots between multiple stationary components. In one embodiment, each of the shim seals 14 may include a C-shaped structure. In another embodiment, each of the shim seals 14 may include a box-shaped structure. If desired, combinations of C-shaped and box structures may be used. It is to be noted that the stator portion 10 may be any stator region of the rotary machine around a fluid flow path. The stationary component 12 along with other stationary components of the rotary machine may be arranged such that multiple slots 18 are included between the stationary components 12. In one embodiment, a first half of the shim seal 14 is located in slot 18 of a first stationary shroud component and a second half of the shim seal 14 is located in a slot of a second adjacent stationary shroud component of the rotary machine (as shown by element 19 in FIG. 2). The seal assembly 16 having multiple shim seals 14 ensures that the fluid flow through the slots 18 is minimized, thereby allowing the rotary machine to maintain high efficiency with reduced leakages during operation. In one embodiment, the shim seal 14 includes a layer situated within the C-shaped or box shared structure for further minimizing leakages. The details of the shim seals 14 are further described below.

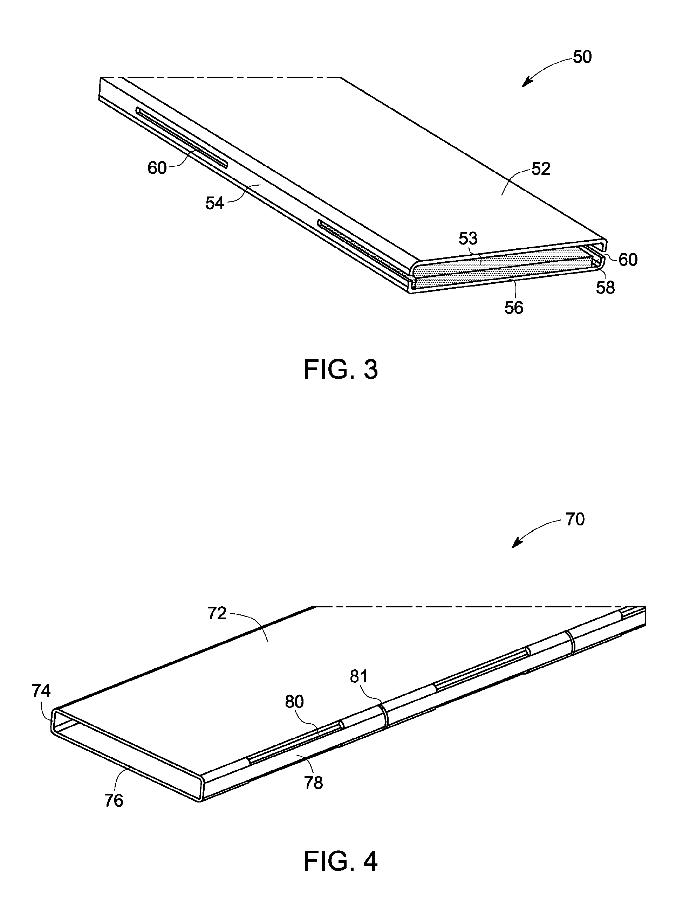

FIG. 2 is a cross-sectional view of a shim seal 14 of a rotary machine in accordance with an embodiment of the present invention. As shown in this embodiment, the shim seal 14 includes multiple seal plate faces 22, 24, 26, 28, 30, 32 that form a C-shaped shim seal 14 located within slots 18, 19 between stationary components 12, 13. As used herein "slot" may refer either to a single slot in one of the stationary components or the collective region formed by two adjacent slots. The seal plates 24 and 30 form two straight faces of the C-shaped shim seal 14. The multiple seal plate faces 22, 26, 28, 32 may be used to assist in positioning of the shim seal during assembly within the slots 18, 19 between the stationary components 12 and 13. The C-shaped shim seal 14 includes a first side portion 34 that has a width d₁ that is smaller than a width d₂ of a second side portion 36 in accordance with one embodiment. The first side portion 34 includes the seal plates 26 and 28 joined together to form a corner 40, whereas, the second side portion 36 has seal plates 22 and 32 connected with seal plates 24 and 30 respectively at an angle, but not directly connected to each other. During insertion of the shim seal 14 in the rotary machine, the angled faces of the seal plates 22 and 32 assist in insertion of the shim seal 14 in the slots 18 between stationary components, while angled faces of the seal plates 26, 28 assist in leaving room for the positioning of an adjacent component of the rotary machine in a manner that its slot can accommodate the first side portion 34. At the second side portion 36, the C-shaped structure of the shim seal 14 also includes a variable gap 37. The gap 37 is designed such that the C-shaped shim seal 14 can be placed into the slot 18 of stationary component 12 without the use of glue or any other attachment means and will be firmly held with the slot 18 until the stationary component 13 is assembled next to the stationary component 12. The seal plates 22, 32 and 26, 28 help during assembly in case of misalignment. In one embodiment, the shim seal 14 may be manufactured from an integral plate by a bending process to allow for easy formation of the second side portion 36 with the variable gap 37. Further, during operation of the seal, the gap 37 in the second side portion 36 helps by allowing high pressure fluid to occupy the cavity of the C-shaped seal and by equalizing the pressure across the high pressure sections of the shim seal 14 such that high pressure acts mainly on the interior surface of the seal plate 30 of the shim seal 14. Both the first side portion 34 and the second side portion 36 are separated by a length x, wherein the length 'x' of the C-shaped shim seal is greater than width 'd₁', or 'd₂', thereby forming an elongated C-shaped shim seal. Prior to insertion in slot 18, the width 'd₂' of the second side portion 36 is greater than the width of the slot 18 of the stationary components 12. The C-shaped structure with variable widths of the first side portion 34 and the second side portion 36 enables the shim seal 14 to have a positive retention. Due to this positive retention, the seal plates 24 and 30 remain in close contact with walls of the slots 18, 19 between the stationary components 12, thus maintaining sealing during operation of the rotary machine and enabling the shim seal 14 to be retained within the slots 18, 19. Further, in one embodiment, each of the corners 38, 40, 42, 44 and 46 formed by the seal plates 22, 24, 26, 28, 30, 32 has a small radius of curvature. Furthermore, in one embodiment, the seal plates 26 and 28 may include multiple cuts (not shown in FIG. 2 but represented by cuts 60 in FIG. 3_and cuts 80 and 81 in FIG. 4 for example) for allowing high pressure fluid to more easily occupy the cavity formed by the C-shaped shim seal 14.

In one embodiment, the thickness of the seal plates of the shim seal 14 may be about 15 thousands of an inch. Any structurally and thermally suitable materials may be used for the seal plates, with high temperature elastic materials being recommended. A non-limiting example of a material of the shim seal 14 may include a nickel molybdenum chromium alloy such as available from Haynes International. Additionally, as used herein, "joined" or "connected" are intended to cover embodiments where separate plates are physically attached as well as embodiments wherein an integral plate is bent to form the plates.

Furthermore, in one embodiment, the shim seal 14 of FIG. 2 may include a layer (not shown in FIG. 2 but represented by layer 53 in FIG. 3 for example) for reducing leakages in case of failure of seal plates 24 or 30. Such a layer may also provide additional structural support to the shim seal 14. Non-limiting examples of the layer includes a glass plate, a ceramic structure, or a metal woven cloth. It is to be noted that the size of the shim seal 14 and any additional layer in terms of length may be according to the length of slots 18, 19 which may differ at various locations of the stator of the rotary machine.

FIG. 3 is a perspective view of the shim seal 50 of a rotary machine in accordance with another embodiment of the present invention. In the embodiment of FIG. 3, the shim seal 50 is a box-shaped shim seal that is formed of seal plates 52, 54, 56 and 58. During assembly of the stationary components of the rotary machines, one of the seal plates 52 or 56 may be glued to the slot of one stationary component in accordance with an embodiment of the present invention. This box-shaped shim seal 50 includes a rectangular cross-sectional shape that preferably has curved corners. The shim seal 50 is capable of a tight fit within a gap between the stationary components of the rotary machine for reducing leakage. For example, the size of the shim seal 50 may be selected according to the gap size between the stationary components at various locations of the rotary machine, wherein the length and breadth of the sides of shim seal 50 are almost equal to the length and breadth of the gap between the stationary components. In this embodiment, the seal plates 52 and 56 are elongated and aligned in parallel to each other, while the seal plates 54 and 58 at the sides include multiple cuts 60. In one embodiment, the multiple cuts 60 are located symmetrically at centers of the opposing sides 54, 58. The multiple cuts 60 allow high pressure fluid to occupy the cavity of the box-shaped shim seal 50. This prevents deformation of the box-shaped structure of the shim seal 50 and controls the leakage. In one embodiment, the thickness of the seal plates 52, 54, 56, 58 of the shim seal 50 may be about 15 mils. A non-limiting example of a material of the shim seal 50 may include a nickel molybdenum chromium alloy such as available from Haynes International. Further, in one embodiment, the shim seal 50 may include the additional layer 53 for reducing leakages in case of failure of seal plates 52 or 56. Such a layer may also provide additional structural support to the shim seal 50. Non-limiting examples of the layer 53 includes a glass plate, a ceramic structure, or a metal woven cloth. As in the C shaped embodiment, in the box embodiment, separate plates may be attached together or an integral sheet may include bends.

FIG. 4 is a perspective view of a shim seal 70 of a rotary machine in accordance with another embodiment of the present invention. In this embodiment, the shim seal 70 is a box-shaped shim seal formed of flat seal plates 72, 74, 76, 78 with multiple cuts 80 at the curved corners. The multiple cuts 80 allow high pressure fluid to occupy the cavity of the box-shaped shim seal 70. This prevents deformation of the box-shaped structure of the shim seal 70 and controls the leakage through the gaps between the stationary components of the rotary machine. In one embodiment, the multiple cuts 80 may be provided vertically shown as vertical cuts 81 at opposing sides of the shim seal 70 at the flat seal plates 74 and 78. In another embodiment, the shim seal 70 may not include any cuts.

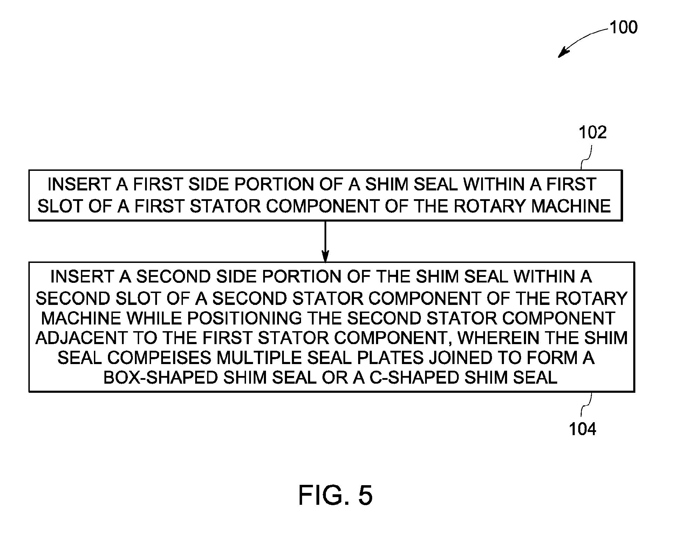

FIG. 5 is a flow chart for a method 100 of reducing leakage in a rotary machine in accordance with an embodiment of the present invention. At step 102, the method includes inserting a first portion of the shim seal comprising box-shaped shim seal or a C-shaped shim seal into a first slot of a first stationary component. In one embodiment, the method includes obtaining the C-shaped cross-section of the shim seal. In another embodiment, the method includes obtaining the box-shaped shim seal. At step 104, the method includes disposing a second stationary component next to the first stationary component. The second stationary component has a second slot, and a second portion of the shim seal is inserted into that section slot during the positioning of the second component. The multiple shim seals within multiple slots between stator components of the rotary machine are used for reducing leakage through multiple slots. In one embodiment, the method also comprises providing a layer of glass or ceramic or a metal woven cloth within the shim seal in case of failure of the seal plates for reducing leakages and further providing additional structural support to the shim seal.

Advantageously, the present seal assembly and method ensures reduced leakages between gaps of stationary components of the rotary machines. The shim seal with C-shaped or box-shaped structure efficiently seals leading to lesser parasitic leakages within the gaps of stationary components in gas or steam turbines or other rotary machines. This further leads to increased combined cycle efficiency and lower operating cost of the rotary machine. Since the present seal assembly and method reduces leakages, this enables a decrease in bum temperature for maintaining a power level during operation of rotary machine.

Furthermore, the skilled artisan will recognize the interchangeability of various features from different embodiments. Similarly, the various method steps and features described, as well as other known equivalents for each such methods and feature, can be mixed and matched by one of ordinary skill in this art to construct additional assemblies and techniques in accordance with principles of this disclosure. Of course, it is to be understood that not necessarily all such objects or advantages described above may be achieved in accordance with any particular embodiment. Thus, for example, those skilled in the art will recognize that the assemblies and techniques described herein may be embodied or carried out in a manner that achieves or optimizes one advantage or group of advantages as taught herein without necessarily achieving other objects or advantages as may be taught or suggested herein.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A seal assembly (16) for a rotary machine, the seal assembly (16) comprising:
a shim seal (14, 50) sized for positioning in a slot (18) between stator (12, 13) components of the rotary machine and comprising a plurality of seal plates (22-32, 52-58) forming one of one of a C-shaped shim seal (14) or a box-shaped shim seal (50).

2. The seal assembly of claim 1, wherein the plurality of seal plates (22-32) form a C-shaped shim seal and wherein the shim seal (14) comprises two straight faces (24, 30) coupled by first and second side portions (34, 36), wherein a first side portion (34) has a smaller width than the second side portion (36), wherein the second side portion (36) comprises a gap (37) and an inward angle for allowing for insertion of the shim seal (14) within the slot (18) between the stator components (12, 13).

3. The seal assembly of claim 2, wherein, prior to insertion within the slot (18), the width of the second side portion (36) is greater than a width of the slot (18).

4. The seal assembly of claim 2 or 3, wherein the first and second side portions (34, 36) each comprise at least two corners (38-46) with curvatures.

5. The seal assembly of any of claims 2 to 4, wherein the first side portion (34) of the C-shaped shim seal comprises a plurality of cut (60).

6. The shim seal assembly of claim 1 wherein the plurality of seal plates (52-58) form a box-shaped shim seal (50); wherein the box-shaped shim seal (50) comprises a rectangular cross-sectional shape with corners having curvatures.

7. The shim seal of claim 6, wherein the box-shaped shim seal (50) comprises a plurality of cuts (60) at two opposing sides coupling two straight faces for allowing high pressure fluid to occupy the cavity of the box-shaped shim seal (50), wherein the cuts (60) are located symmetrically at centers of the opposing sides (54, 58).

8. The shim seal of claim 6, wherein the box-shaped shim seal (50) comprises a plurality of cuts (80, 81) located at corners formed by two opposing sides coupling the two straight faces, wherein the plurality of cuts (80, 81) are shaped horizontally at the corners or vertically shaped at the opposing sides.

9. The seal assembly of any preceding claim, wherein the shim seal (14) comprises a layer (53) of metal woven cloth or a glass plate or a ceramic structure within the plurality of seal plates (22-32).

10. The seal assembly of any preceding claim, wherein the seal plates comprise a nickel molybdenum chromium alloy.

11. A method of reducing leakage in a rotary machine, the method comprising:
inserting a first side portion (34) of a shim seal (14) within a first slot (18) of a first stator component of the rotary machine; and
inserting a second side portion (36) of the shim seal (14) within a second slot (18) of a second stator component of the rotary machine while positioning the second stator component adjacent to the first stator component,
wherein the shim seal (14) comprises a plurality of seal plates joined to form a box-shaped shim seal (50) or a C-shaped shim seal (14).

12. The method of claim 11, wherein the C shaped shim seal (14) comprises two straight faces (24, 30) coupled by first and second side portions (34, 36) with the first side portion (36) comprising a closed side of a first width and the second side portion comprising an open side with a second width greater than the first width and greater than a width of the slot (18) prior to insertion into the slot (18), wherein inserting the shim seal (14) comprises compressing the second side portion (36), positioning the shim seal (14) in the slot (18), and releasing the compression.

13. The method of claim 12, wherein the first side portion (34) comprises a plurality of cuts (60) for allowing high pressure fluid to occupy the cavity of the C-shaped shim seal (14).

14. The method of claim 11, wherein the shim seal (70) comprises a box shaped shim seal including a plurality of cuts (80, 81) at two opposing sides or corners for allowing high pressure fluid to occupy the cavity of the box-shaped shim seal (70).

15. The method of any of claims 11 to 14, wherein the shim seal (14) includes a layer (53) of glass or ceramic or a metal woven cloth within the seal plates (22-32).

16. The method of any of claims 11 to 15, wherein the shim seal (14) comprises an integral plate bent to form the plurality of seal plates (22-32).
